# EUROPEAN PATENT APPLICATION

(11) **EP 2 393 138 A1**
(43) Date of publication of application: **07.12.2011**
(21) Application number: 11156753.3
(22) Date of filing: 03.03.2011
(51) Int. Cl.: H01M 2/04, H01M 2/06, H01M 2/08, H01M 2/30

(54) **Cap assembly and method of manufacturing a cap assembly**

(30) Priority: 07.06.2010 US 352198 P; 17.02.2011 US 30104
(71) Applicant: Samsung SDI Co., Ltd., Yongin-si, Gyeonggi-do (KR)
(72) Inventor: Baek, Woonseong, Gyeonggi-do (KR)
(74) Representative: Walaski, Jan Filip

(57) **Abstract**

A cap assembly for a secondary battery, comprising a cap plate having a hole, an electrode terminal in the hole, the electrode terminal comprising an upper terminal portion, a lower terminal portion and a connecting portion connecting the upper and lower terminal portions and an injection moulded portion sealing the hole around the electrode terminal.

## Description

The present invention relates to a cap assembly and a method of manufacturing a cap assembly.

Unlike primary batteries, secondary batteries, which can be repeatedly charged and discharged, are widely used for various advanced electronic devices, such as cellular phones, notebook computers, camcorders, hybrid electric vehicles (HEV), electric automobiles, electric bicycles, electric scooters, or the like. Lithium ion batteries are particularly attractive because they operate at 3.6 V, a voltage three times higher than that of nickel-cadmium batteries and nickel-hydrogen batteries which are widely used as power supplies for portable electronic appliances. In addition, lithium ion batteries have high energy density per unit weight.

Lithium ion batteries are generally classified ones using liquid electrolytes and ones using polymer or gel-type electrolytes according to the type of electrolyte used. Lithium ion batteries can also take various shapes, including prismatic, cylindrical and pouch types.

Embodiments of the present invention provide a cap assembly, which has a minimum number of components and a simplified assembling process, and a secondary battery having the same.

According to an aspect of the invention, there is provided a cap assembly for a secondary battery, comprising a cap plate having a hole, an electrode terminal in the hole, the electrode terminal comprising an upper terminal portion, a lower terminal portion and a connecting portion connecting the upper and lower terminal portions and an injection moulded portion sealing the hole around the electrode terminal.

The upper and lower terminal portions may comprise substantially parallel plates and the connecting portion may be substantially perpendicular to the parallel plates, wherein the upper terminal portion is wider than the lower terminal portion.

A width of the lower terminal portion may be equal to or greater than the diameter of the hole, and sized to permit the lower terminal portion to fit through the hole.

The cap assembly may further comprise a groove in an upper surface of the cap plate for receiving the upper terminal portion, the groove being filled with the moulded portion. The moulded portion may surround the electrode terminal so that only its upper and lower surfaces are exposed. The moulded portion may surround the electrode terminal and protrude above the upper surface of the cap plate higher than the electrode terminal. The protruding portion of the moulded portion may have an inclined surface for guiding a terminal of an external device onto the electrode terminal.

The electrode terminal may comprise a first electrode terminal, and the cap assembly may further comprise a second electrode terminal, wherein the groove comprises a first groove, and the cap plate includes a second groove formed at a periphery of the second electrode terminal, and the moulded portion may be in the first and second grooves and surround both the first and the second electrode terminals.

The second electrode terminal may comprise a protruding portion of the cap plate.

The second electrode terminal may comprise an upper terminal portion, a lower terminal portion and a connecting portion connecting the upper and lower terminal portions.

The moulded portion may electrically insulate the first and second electrode terminals from the cap plate.

The cap assembly may further comprise a protective circuit module, the protective circuit module comprising a circuit board connected to a lower surface of the electrode terminal by a conductive pad.

The cap assembly may comprise first and second auxiliary moulding portions between the protective circuit module and the cap plate for locating the protective circuit module relative to the cap plate.

According to a further aspect of the invention, there is provided a secondary battery including a cap assembly as defined above.

According to a still further aspect of the invention, there is provided a method of manufacturing a cap assembly for a secondary battery, comprising inserting an electrode terminal through a hole in a cap plate, the electrode terminal comprising an upper terminal portion, a lower terminal portion and a connecting portion connecting the upper and lower terminal portions and sealing the hole around the electrode terminal by injection moulding.

The step of injection moulding may comprise providing upper and lower moulds around the cap plate, supporting a bottom surface of the electrode terminal on the lower surface of the lower mould and injecting moulding resin around the electrode terminal such that the moulding resin surrounds all of the surfaces of the electrode terminal other than the top and bottom surfaces.

Embodiments of the invention will now be described by way of example, with reference to the accompanying drawings, in which:
FIG. 1 is a perspective view of a secondary battery according to an exemplary embodiment of the present invention;
FIG. 2A is an exploded perspective view of the secondary battery illustrated in FIG. 1, and FIG. 2B is a partially enlarged view of FIG. 2A;
FIGS. 3A, 3B and 3C are cross-sectional views taken along lines 3a-3a, 3b-3b and 3c-3c of FIG. 2A;
FIG. 4 is a partially longitudinal section view of FIG. 1;
FIGS. 5A and 5B are cross-sectional views illustrating a method of manufacturing a cap assembly according to another exemplary embodiment of the present invention;
FIG. 6 is a cross-sectional view of a cap assembly according to another exemplary embodiment of the present invention;
FIGS. 7A, 7B and 7C are a cross-sectional view, an exploded cross-sectional view and an exploded perspective view of a secondary battery according to still another exemplary embodiment of the present invention;
FIG. 8 is a cross-sectional view of a secondary battery according to still another exemplary embodiment of the present invention;
FIG. 9 is a partially longitudinal sectional view of a secondary battery according to still another exemplary embodiment of the present invention;
FIG. 10 is a flowchart illustrating a method of manufacturing a secondary battery according to still another exemplary embodiment of the present invention; and
FIGS. 11A through 11F are sectional views sequentially illustrating processing steps in the manufacturing method of FIG. 10.

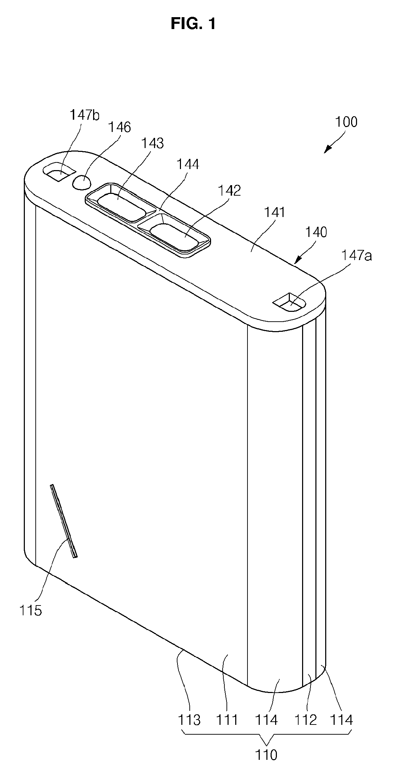

As illustrated in FIG. 1, the secondary battery 100 includes a substantially prismatic case 110, and a cap assembly 140 sealing an upper end of the case 110. The cap assembly 140 includes a cap plate 141, first and second electrode terminals 142 and 143, a resin molding 144, and a sealing member 146 closing an electrolyte plug (not shown).

In addition, grooves 147a and 147b having a predetermined depth may be formed in the cap plate 141 to facilitate engagement with external devices (not shown).

Further, a safety vent 115 having a relatively small thickness may be formed at either side of the case 110 to rapidly exhaust internal gases such that it fractures when an internal pressure of the case 110 increases.

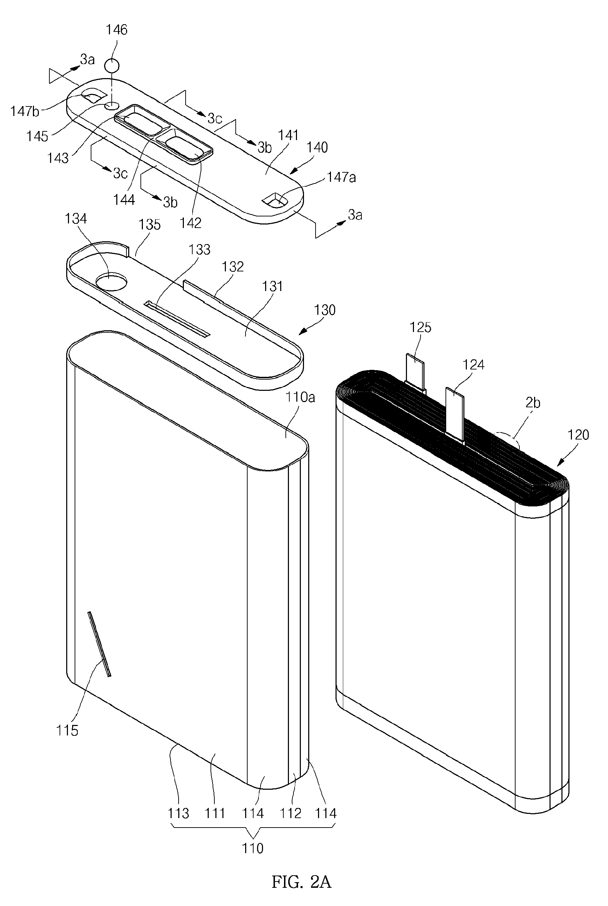

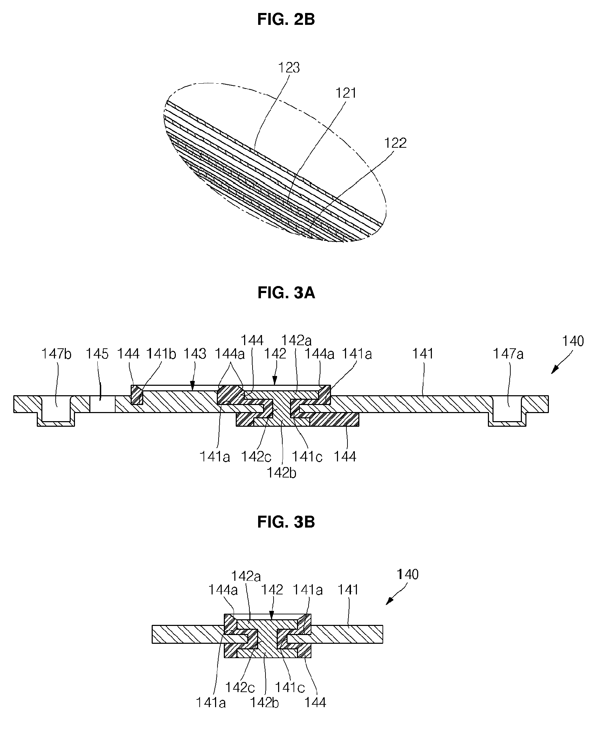

As illustrated in FIGS. 2A and 2B, the secondary battery 100 includes a substantially prismatic case 110, an electrode assembly 120 having a substantially jelly-roll configuration and accommodated in the case 110, an insulation plate 130 positioned on the electrode assembly 120, and a cap assembly 140 sealing an upper end of the prismatic case 110.

The case 110 has an opening 110a formed at its top surface so as to allow the electrode assembly 120 to be inserted into the case 110 therethrough. In addition, the case 110 includes two long-side areas 111, two short-side areas 112, and a bottom area 113. The two long-side areas 111 have relative large areas, and are spaced a predetermined distance apart from each other in opposite directions. The two short-side areas 112 connect opposite perimeters of the long-side areas 111 to each other and have relative small areas. The bottom area 113 is formed to close one sides of each of the long-side areas 111 and the two short-side areas 112. The bottom area 113 is formed in the opposite direction of the opening 110a. In such a manner, the case 110 has a generally rectangular plane shape. Further, curved areas 114 having a predetermined curvature may be formed between the long-side areas 111 and the two short-side areas 112. In a case where the case 110 has the curved areas 114 formed thereat, the external shape of the case 110 is substantially the same as that of the electrode assembly 120, so that there is little gap between the case 110 and the electrode assembly 120, thereby attaining the secondary battery 100 with a very compact size. Here, the safety vent 115 that is relatively thin may be formed on the long-side area 111 of the case 110 to allow internal gases to be discharged to the outside of the case 110 such that it fractures when an internal pressure of the case 110 increases.

The electrode assembly 120 includes a first electrode plate 121, a separator 123 and a second electrode plate 122 stacked and wound repeatedly in substantially a jelly-roll configuration. In addition, each of a first electrode tab 124 connected to the first electrode plate 121 and a second electrode tab 125 connected to the second electrode plate 122 extends a predetermined length upwardly. A height of the separator 123 is slightly greater than that of the first electrode plate 121 or the second electrode plate 122, so that the first electrode plate 121 and the second electrode plate 122 may not directly contact the case 110. Alternatively, an insulation tape (not shown) may further be provided to wrap around the outer circumference of the electrode assembly 120.

The insulation plate 130 includes a plate area 131 that is substantially planar, and a peripheral area 132 that extends a predetermined length upwardly along the perimeter of the plate area 131. The plate area 131 has a first hole 133 formed to facilitate upward passage of the first electrode tab 124, and at least one second hole 134 spaced apart from the first hole 133 to facilitate injection of an electrolyte. In addition, the peripheral area 132 may have a cut-out area 135 to facilitate upward passage of the second electrode tab 125.

The cap assembly 140 includes a cap plate 141 formed in substantially a plate shape, a first electrode terminal 142 formed at approximately the center of the cap plate 141, a second electrode terminal 143 spaced apart from the first electrode terminal 142, an insulating resin molding 144 sealing peripheral portions of the first electrode terminal 142 and the second electrode terminal 143, and a sealing member 146 sealing an electrolyte injection hole 145 of the cap plate 141. In addition, grooves 147a and 147b each having a predetermined depth may be formed in the cap plate 141. The cap assembly 140 having the aforementioned configuration will further be described below.

The case 110 and the cap plate 141 may be formed of aluminum, aluminum alloy, copper, copper alloy, steel, steel alloy, or stainless steel, but materials of the case 110 and the cap plate 141 are not limited to those listed herein.

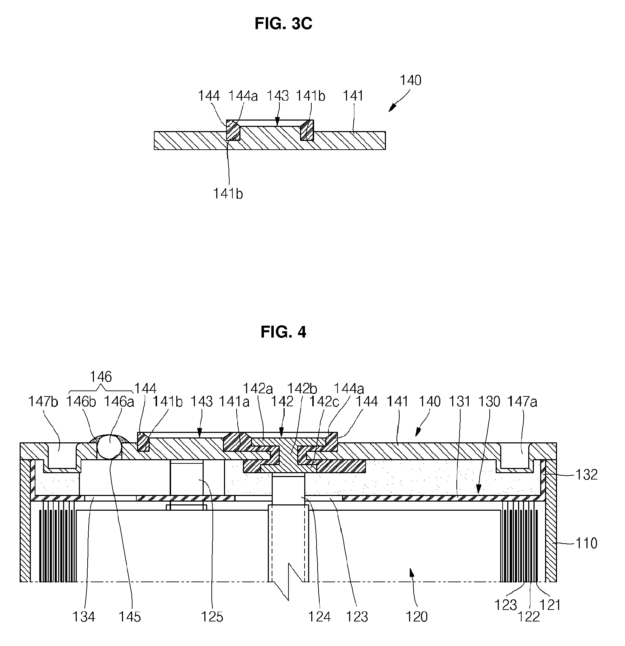

FIGS. 3A, 3B and 3C are cross-sectional views taken along lines 3a-3a, 3b-3b and 3c-3c of FIG. 2A.

As illustrated in FIGS. 3A and 3B, the cap plate 141 includes grooves 141a and 141b each having a predetermined depth and width formed at approximately the center and the exterior thereof. In addition a first hole 141c penetrating through the cap plate 141 is provided in the centrally formed groove 141 a. Here, a width of the centrally formed groove 141a is greater than the outwardly formed groove 141b, and the centrally formed groove 141a and the outwardly formed groove 141b are practically connected to each other. The first electrode terminal 142 is coupled to the centrally formed groove 141a and the first hole 141c. The first electrode terminal 142 includes an upper terminal 142a, a lower terminal 142b, and a connection part 124c connecting the upper terminal 142a and the lower terminal 142b.

A width of the upper terminal 142a is larger than that of the lower terminal 142b, facilitating the upper terminal 142a to be electrically connected to an external device. In addition, in order to allow the lower terminal 142b to easily pass through the first hole 141c, a width of the lower terminal 142b is equal to or slightly greater than a diameter of the first hole 141c.

Further, the upper terminal 142a is spaced apart from the groove 141a to be positioned thereon, the lower terminal 142b is spaced apart from the first hole 141c to be positioned thereunder, and the connection part 142c is positioned inside the first hole 141c. However, the connection part 142c is not in contact with inner walls of the first hole 141c. In addition, the first electrode terminal 142 is electrically insulated from the cap plate 141. That is to say, a resin molding 144 is formed in the groove 141a and the first hole 141c formed in the cap plate 141 by an insertion-molding process. In other words, the groove 141a and the first hole 141c formed in the cap plate 141 are filled with the resin molding 144 by insertion-molding. The resin molding 144 completely seals the upper terminal 142a, the lower terminal 142b and side regions of the connection part 142c, which are formed in the first electrode terminal 142.

Meanwhile, the first electrode terminal 142 may be made of any one material having high strength and excellent electrical conductivity selected from the group consisting of nickel-plated aluminum, nickel-plated copper, nickel-plated iron, nickel-plated carbon steel wires for cold heading and cold forging (referred to simply as JIS SWCH), and equivalents thereof. However, the present invention does not limit materials of the first electrode terminal 142 to those listed herein.

As illustrated in FIGS. 3A and 3C, the second electrode terminal 143 is formed on a top surface of the cap plate 141 spaced apart from the first electrode terminal 142. The groove 141b having a predetermined depth is formed at outer sides of the second electrode terminal 143, and is filled with a resin molding 144. The second electrode terminal 143 upwardly protrudes from the groove 141b by a predetermined length. In practice, the second electrode terminal 143 is a region formed by processing a predetermined area of the cap plate 141. The second electrode terminal 143 is made of the same material as the cap plate 141. The side regions of the second electrode terminal 143 are also completely sealed by the resin molding 144. In addition, heights of the first electrode terminal 142 and the second electrode terminal 143 are equal to each other for establishing a better connection with external devices. Further, the first electrode terminal 142 and the second electrode terminal 143 upwardly exposed through the resin molding 144 may be formed such that they have the same planar shape with each other.

The resin molding 144 completely seals peripheral portions of the side regions of the first electrode terminal 142 and the second electrode terminal 143. In particular, the resin molding 144 upwardly protrudes from the cap plate 141 by a predetermined length. That is to say, the resin molding 144 upwardly protrudes relatively higher than the first electrode terminal 142 and the second electrode terminal 143. In such a manner, the first electrode terminal 142 and the second electrode terminal 143 may not be easily shorted by an external conductor. In addition, the resin molding 144 may further include an upwardly inclined surface 144a formed at upper portions of the first electrode terminal 142 and the second electrode terminal 143. The inclined surface 144a allows terminals of an external device to be guided well to the respective centers of the first electrode terminal 142 and the second electrode terminal 143.

The resin molding 144 can be formed of most plastic materials as long as they can be applied to injection molding. Useful examples of the resin molding 144 may include polyvinyl chloride (PVC), polystyrene (PS), high density polyethylene (HDPE), polypropylene (PP), acrylonitrile butadiene styrene (ABS), polyacetal (POM), polyphenylene oxide (PPO), polyphenyl ether (PPE), polyamide (nylon) (PAM), polycarbonate (PC), polybutyleneterephthalate (PBT), Upolymer (U), polysulfone (PSF), polyphenylene sulfide (PPS), polyether imide (PEI), polyethersulfone (PES), polyarylate (PAR), polyether ether ketone (PEEK), polytetrafluoroethylene (PTFE), polyamide imide (PAI), polyimide (PI), and equivalents thereof. In addition, the resin molding 144 may also be made of conventional fluoride resin or epoxy resin. However, the present invention does not limit the material of the resin molding 144 to those listed herein.

FIG. 4 is a partially longitudinal section view of FIG. 1.

As illustrated in FIG. 4, the first electrode tab 124 of the electrode assembly 120 is electrically connected to a lower terminal 142b of the first electrode terminal 142. Therefore, the first electrode terminal 142 will have a first electrode (for example, a negative electrode). In addition, the second electrode tab 125 of the electrode assembly 120 is electrically connected to the cap plate 141. Here, since the second electrode terminal 143 protrudes from the cap plate 141, the second electrode tab 125 is electrically connected to the second electrode terminal 143. Therefore, the cap plate 141 and the second electrode terminal 143 will have a second electrode (for example, a positive electrode). Since the cap plate 141 is electrically connected to the case 110, the case 110 will also have the second electrode.

Here, the insulation plate 130 is interposed between the electrode assembly 120 and the cap plate 141, and prevents the electrode assembly 120 from moving up and down. Particularly, the peripheral area 132 of the insulation plate 130 separates the electrode assembly 120 and the cap plate 141 from each other by a predetermined interval, thereby preventing the electrode assembly 120 from moving up and down more aggressively.

The electrolyte injection hole 145 formed in the cap plate 141 is sealed by the sealing member 146. The sealing member 146 includes a metal ball 146a directly contacting and closing the electrolyte injection hole 145, and a UV hardener 146b covering the metal ball 146a and a peripheral area of the metal ball 146a. Once the metal ball 146a is coupled to the electrolyte injection hole 145, it is subjected to laser welding. Next, the metal ball 146a and the laser-welded area are coated with the UV hardener 146b.

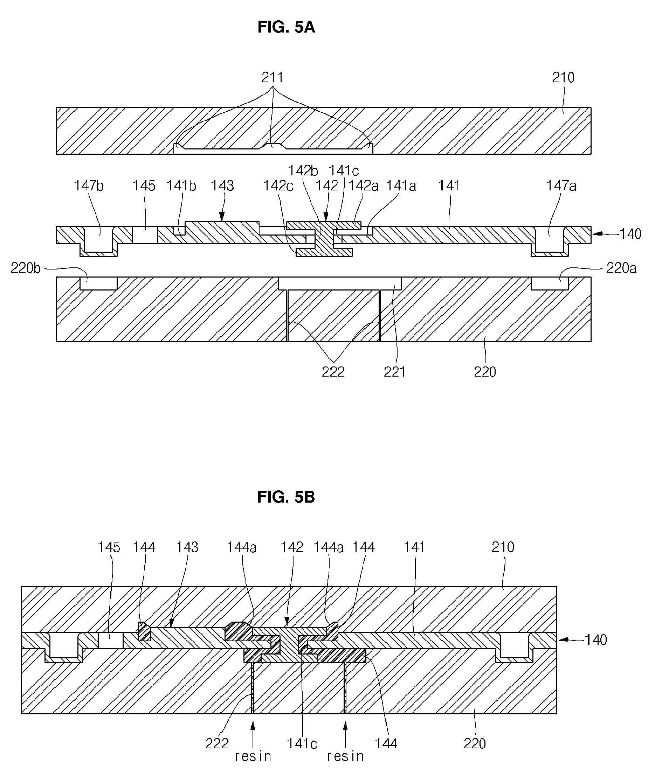

FIGS. 5A and 5B are cross-sectional views illustrating a method of manufacturing a cap assembly according to another exemplary embodiment of the present invention. As illustrated in FIG. 5A, the cap assembly includes an upper mold 210 and a lower mold 220. The upper mold 210 includes a cavity 211 having a predetermined space to allow the resin molding 144 to be formed around the first electrode terminal 142 and the second electrode terminal 143. A portion of the upper mold 210 other than the cavity 211 is planarly formed to closely contact the top surface of the cap plate 141.

The lower mold 220 also a cavity 221 having a predetermined space to allow the resin molding 144 to be formed around the first electrode terminal 142. A portion of the lower mold 220 other than the cavity 221 is planarly formed to closely contact the bottom surface of the cap plate 141. In addition, the lower mold 220 may include grooves 220a and 220b to allow the grooves 147a and 147b formed in the cap plate 141 to be settled thereon.

A plurality of resin injection paths 222 communicating with the cavity 221 may also be formed in the lower mold 220. Although the resin injection paths 222 are formed in the lower mold 220 in the illustrated embodiment, the resin injection paths 222 may also be formed in the upper mold 210.

As illustrated in FIG. 5B, the resin molding 144 is melted and then transferred to the cavity 221 of the lower mold 220 and the cavity 211 of the upper mold 210 through the resin injection paths 222 provided in the lower mold 220. The cavity 221 of the lower mold 220 and the cavity 211 of the upper mold 210 are connected to each other by the first hole 141c formed in the cap plate 141. In doing so, the resin molding 144 is injected to the cavity 221 of the lower mold 220 and the cavity 211 of the upper mold 210, side regions of upper portions on the first electrode terminal 142 and the second electrode terminal 143 are completely sealed by the resin molding 144. Side regions of lower portions of the first electrode terminal 142 are also completely sealed by the resin molding 144. In addition, the first hole 141c of the cap plate 141 coupled to the first electrode terminal 142 is also completely filled with the resin molding 144, so that the first electrode terminal 142 and the cap plate 141 may be completely electrically insulated from each other.

As described above, according to the present embodiment, a single electrode terminal, that is, the first electrode terminal 142, is coupled to the first hole 141c of the cap plate 141 and is then positioned between the upper mold 210 and the lower mold 220, followed by insertion-molding the resin molding 144, thereby providing the cap assembly 140 with a reduced number of components in a simplified assembling process. In addition, since the resin molding 144 is formed to be higher than the first and second electrode terminals 142 and 143, the first and second electrode terminals 142 and 143 are not electrically shorted together by an external conductor. In addition, the resin molding 144 may further include an upwardly inclined surface 144a formed at upper portions of the first electrode terminal 142 and the second electrode terminal 143, thereby allowing terminals of an external device to be guided well to the respective centers of the first electrode terminal 142 and the second electrode terminal 143.

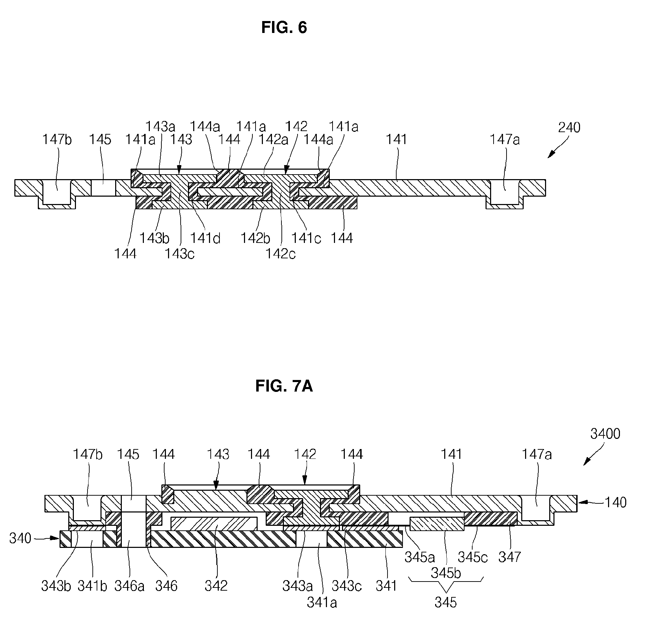

FIG. 6 is a cross-sectional view of a cap assembly according to another exemplary embodiment of the present invention.

As illustrated in FIG. 6, in the cap assembly 240, not only the first electrode terminal 142 but also the second electrode terminal 143 may be electrically insulated from the cap plate 141.

In more detail, the second electrode terminal 143 includes an upper terminal 143a upwardly protruding from the cap plate 141, a lower terminal 143b downwardly protruding from the cap plate 141, and a connection part 143c electrically connecting the upper terminal 143a and the lower terminal 143b. In order to allow the second electrode terminal 143 to be connected to the cap plate 141, the cap plate 141 may include a second hole 141d. In addition, in order to make the upper terminal 142a of the first electrode terminal 142 and the upper terminal 143a of the second electrode terminal 143 sufficiently spaced apart from each other, a width of a groove 141a may be greater than the sum of widths of the first electrode terminal 142 and the second electrode terminal 143. In this embodiment, the groove 141a may also be considered to be first and second grooves at opposite ends of the first and second electrode terminals 142, 143.

In such a manner, the resin molding 144 is formed around the upper terminal 143a of the second electrode terminal 143, the lower terminal 143b and the connection part 143c. That is to say, the resin molding 144 seals peripheral portions of the upper or lower terminal 143a or 143b of the second electrode terminal 143, In addition, the resin molding 144 fills the second hole 141d to seal the connection part 143c of the second electrode terminal 143.

Accordingly, the first electrode terminal 142 and the second electrode terminal 143 are endowed with polarities, but the cap plate 141 or the case 110 is not endowed with polarity. That is to say, a first electrode tab 124 (not shown) is connected to the lower terminal 142b of the first electrode terminal 142, and a second electrode tab 125 (not shown) is connected to the lower terminal 143b of the second electrode terminal 143.

As described above, according to the present embodiment, the first electrode terminal 142 and the second electrode terminal 143 are coupled to the cap plate 141, respectively, followed by insertion-molding the resin molding 144, thereby providing the cap assembly 140 with a reduced number of components in a simplified assembling process.

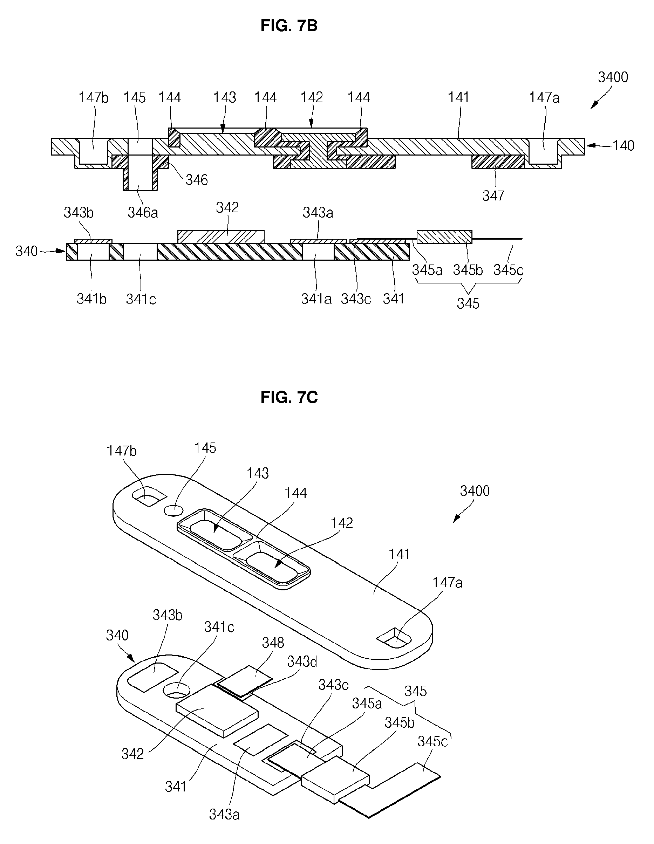

FIGS. 7A, 7B and 7C are a cross-sectional view, an exploded cross-sectional view and an exploded perspective view of a secondary battery according to still another exemplary embodiment of the present invention.

As illustrated in FIGS. 7A, 7B and 7C F, the cap assembly 3400 includes a protective circuit module 340.

The protective circuit module 340 includes a board 341 having a plurality of holes 341a, 341b, and 341c, a circuit device 342 mounted on the board 341 and preventing overcharge, overdischarge and overcurrent of a battery cell, a first conductive pad 343a and a second conductive pad 343b electrically connected to the first electrode terminal 142 and the second electrode terminal 143 of the cap assembly 140, respectively, a fuse element 345 mounted on the board 341 and electrically connected to the first electrode tab 124, and a conductive lead 348 communicating with the board 341 and electrically connected to the second electrode tab 125.

The board 341 includes a third conductive pad 343c communicating with the fuse element 345, and a fourth conductive pad 343c communicating with the conductive lead 348. The fuse element 345 includes a first lead 345a, a fuse body 345b, and a second lead 345c. The first lead 345a is connected to the third 3conductive pad 343c of the board 341, and the second lead 345c is electrically connected to the first electrode tab 124.

Meanwhile, a first auxiliary resin molding 346 and a second auxiliary resin molding 347 may further be formed between the protective circuit module 340 and the cap assembly 140. In more detail, the first auxiliary resin molding 346 is formed at an area corresponding to the injection hole 145 of the cap plate 141. The first auxiliary resin molding 346 also includes a hole 346a to allow for passage of an electrolyte. The first auxiliary resin molding 346 penetrates through the hole 341c formed in the board 341. In such a manner, a position of the protective circuit module 340 is fixed by the first auxiliary resin molding 346, and an unnecessary electrical short between the cap plate 141 and the protective circuit module 340 can also be prevented.

In addition, the second auxiliary resin molding 347 is formed at the cap plate 141 positioned at an area corresponding to the second lead 345c of the fuse element 345. Accordingly, an unnecessary electrical short between the cap plate 141 and the second lead 345c of the fuse element 345 can be prevented by the second auxiliary resin molding 347.

The first auxiliary resin molding 346 and the second auxiliary resin molding 347 may be formed together with the resin molding 144 that seals the first electrode terminal 142 and the second electrode terminal 143. Alternatively, first auxiliary resin molding 346 and the second auxiliary resin molding 347 may be formed separately from the resin molding 144 that seals the first electrode terminal 142 and the second electrode terminal 143. In addition, the first auxiliary resin molding 346 and the second auxiliary resin molding 347 may be made of the same material as the resin molding 144.

In addition, since the circuit device 342 is positioned at a space between the resin molding 144 and the first auxiliary resin molding 346, it is not interfered by other components. In addition, since the first lead 345a of the fuse element 345 is formed at an area corresponding to the resin molding 144, an unnecessary electrical short between since the first lead 345a of the fuse element 345 and the cap plate 141 can be prevented.

The first conductive pad 343a is directly connected to the lower terminal 142b of the first electrode terminal 142 by resistance welding or laser welding. Here, a welding tool may approach the first conductive pad 343a through the hole 341a a formed in the board 341. The second conductive pad 343b is also connected to the cap plate 141 by resistance welding or laser welding. In practice, the second conductive pad 343b may be electrically connected to the bottom of a groove 147b provided in the cap plate 141. Likewise, a welding tool may approach the second conductive pad 343b through the hole 341a formed in the board 341.

Here, the fuse element 345 may function as a current breaker when the internal temperature of a battery cell rises to a reference temperature or higher. For example, the fuse element 345 may be any one selected from a positive temperature coefficient (PTC) device, a bimetal circuit breaker, and equivalents thereof, but the invention does not limit the kind of the fuse element 345 to those listed herein.

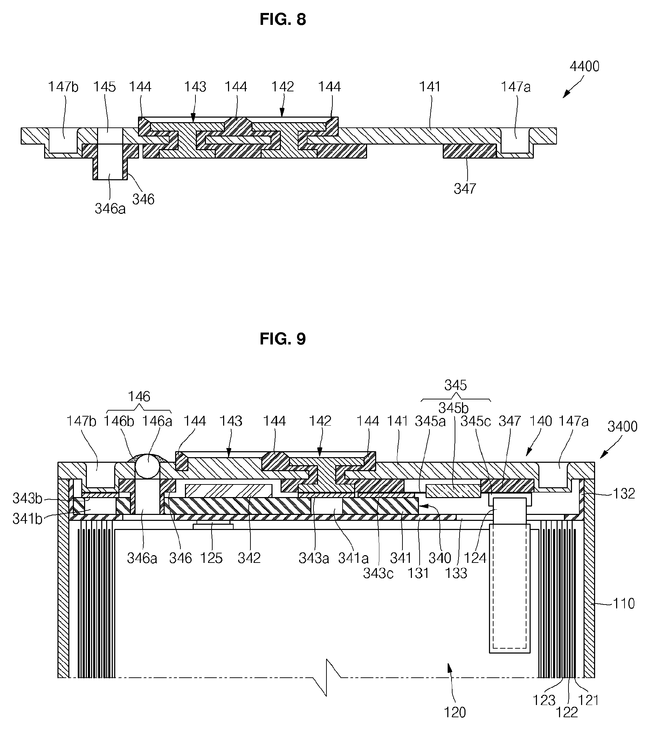

FIG. 8 is a cross-sectional view of a secondary battery according to still another exemplary embodiment of the present invention.

As illustrated in FIG. 8, like in the previous embodiment, in the cap assembly 4400, a first electrode terminal 142 and a second electrode terminal 143 may be formed separately from the cap plate 141. In addition, a first auxiliary resin molding 346 and a second auxiliary resin molding 347 are formed at one side portions of the first electrode terminal 142 and the second electrode terminal 143, respectively. Although not shown, a first conductive pad 343a of a protective circuit module 340 is directly electrically connected to the first electrode terminal 142, and the second conductive pad 343b is directly electrically connected to the second electrode terminal 143.

FIG. 9 is a partially longitudinal sectional view of a secondary battery according to still another exemplary embodiment of the present invention.

As illustrated in FIG. 9, a first electrode tab 124 extending from an electrode assembly 120 is electrically connected to a second lead 345c of a fuse element 345. Accordingly, the first electrode tab 124 is electrically connected to a first electrode terminal 142 through the second lead 345c of a fuse element 345, a fuse body 345b, a first lead 345a, a third conductive pad 343c, and a first conductive pad 343a. A conductive pattern (not shown) is formed in a board 341, so that the first conductive pad 343a and the third conductive pad 343c are electrically connected to each other.

The second electrode tab 125 is electrically connected to a conductive lead (348 of FIG. 7C) provided in the protective circuit module 340. Accordingly, the second electrode tab 125 is electrically connected to a cap plate 141 through the conductive lead 348, a fourth conductive pad (343d of FIG. 7C) and a second conductive pad 343b. A conductive pattern (not shown) is formed in the board 341, so that the second conductive pad 343b and the fourth conductive pad 343d are electrically connected to each other. Since the second electrode terminal 143 is integrally formed with the cap plate 141, the second electrode tab 125 is electrically connected to the second electrode terminal 143.

The protective circuit module 340 is configured such that it is inserted between the cap assembly 140 and the insulation plate 130. Accordingly, it is possible to prevent the protective circuit module 340 from moving between the cap assembly 140 and the insulation plate 130.

In such a manner, according to the present embodiment, the protective circuit module 340 is housed inside the secondary battery. Therefore, the external shape of the secondary battery is further simplified. In other words, since a process of separately attaching a protective circuit module to the exterior of the secondary battery is skipped, the assembling process of the secondary battery is simplified and the external shape of the secondary battery is further simplified. In other words, according to the present invention, since the cap assembly 3400 or 4400 with the prefabricated protective circuit module 340 attached thereto is provided, the protective circuit module 340 can be housed inside the secondary battery simply by electrically connecting the cap assembly 3400 or 4400 to the electrode assembly 110, and sealing the case 110 with the cap assembly 3400 or 4400.

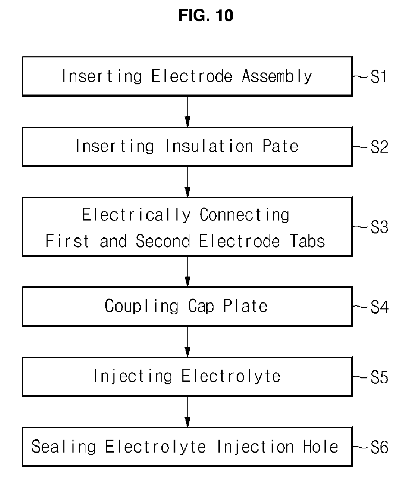

FIG. 10 is a flowchart illustrating a method of manufacturing a secondary battery according to still another exemplary embodiment of the present invention. As illustrated in FIG. 10, the method of manufacturing the secondary battery 100 includes inserting an electrode assembly (S1), inserting an insulation plate (S2), electrically connecting first and second electrode tabs (S3), coupling a cap plate (S4), injecting an electrolyte (S5), and sealing an injection hole (S6).

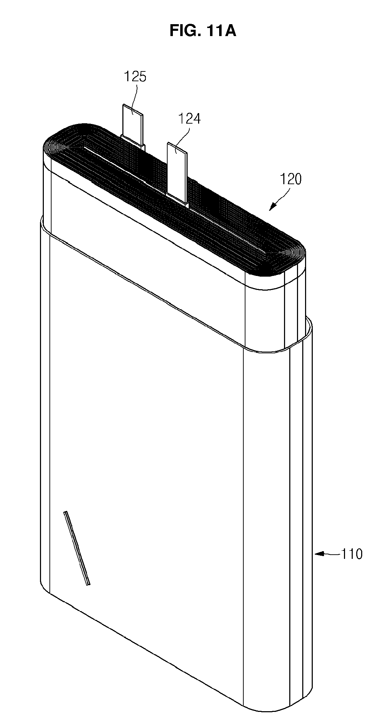

FIGS. 11A through 11F are sectional views sequentially illustrating processing steps in the manufacturing method of FIG. 10.

The method of manufacturing the secondary battery 100 will now be described in greater detail with reference to FIGS. 11A through 11F together with FIG. 10. It is noted that the cap assembly 140 is prefabricated using the cap plate 141, the first electrode terminal 142 and the resin molding 144 by an insertion-molding process.

As illustrated in FIG. 11A, in the inserting of an electrode assembly (S1), an electrode assembly 120 including a first electrode tab 124 and a second electrode tab 125 are inserted into a case 110 having an opening formed at its upper end. Here, the first electrode tab 124 and the second electrode tab 125 upwardly extend from the electrode assembly 120 by a predetermined length, respectively.

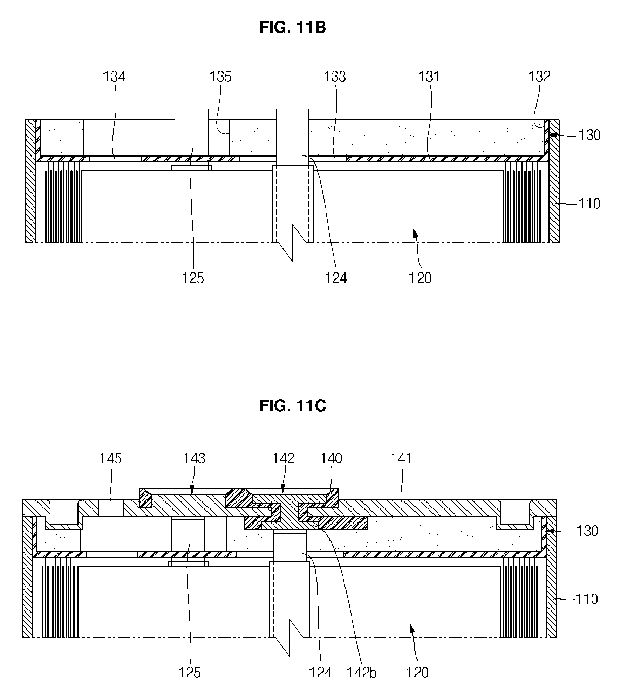

As illustrated in FIG. 11B, in the inserting of an insulation plate (S2), an insulation plate 130 is inserted into the case 110. That is to say, the insulation plate 130 is settled on an upper part of the electrode assembly 120. Here, the insulation plate 130 includes a plate area 131, a peripheral area 132, a first hole 133, a second hole 134, and a cut-out area 135. Therefore, the first electrode tab 124 penetrates through the first hole 133 to then upwardly extend, and the second electrode tab 125 penetrates through the cut-out area 135 to then upwardly extend.

As illustrated in FIG. 11C, in electrically connecting first and second electrode tabs (S3), the first electrode tab 124 is electrically connected to the first electrode terminal 142 of the cap assembly 140 and the second electrode tab 125 is electrically connected to the second electrode terminal 143 of the cap assembly 140. That is to say, the first electrode tab 124 is electrically connected to a lower terminal 142b of the first electrode terminal 142, and the second electrode tab 125 is electrically connected to the bottom of the cap plate 141. Here, a resin molding 144 completely electrically insulates the first electrode terminal 142 from the cap plate 141. However, the second electrode terminal 143 is electrically connected to the cap plate 141.

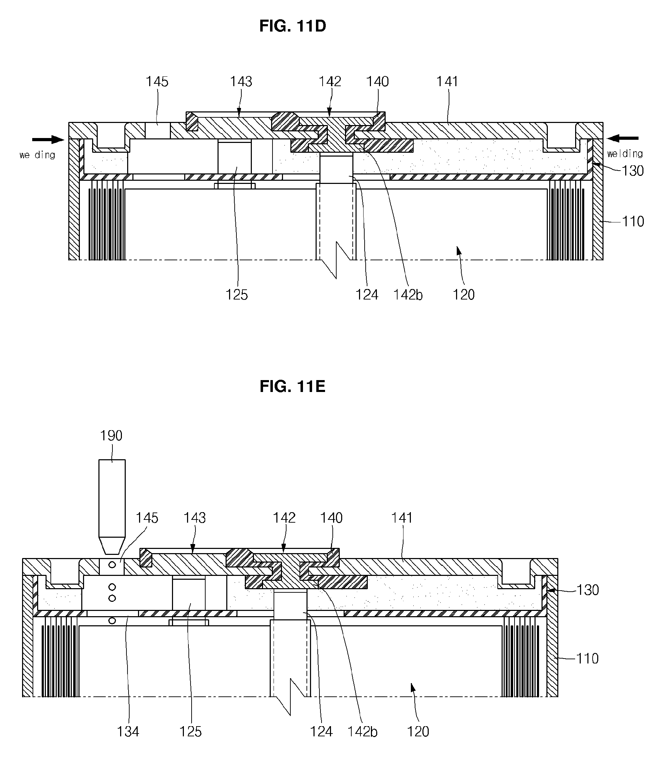

As illustrated in FIG. 11D, in the coupling of a cap plate (S4), the cap plate 141 is coupled to a case 110. That is to say, a peripheral region of the cap plate 141 is coupled to the case 110 by laser welding.

As illustrated in FIG. 11E, in the injecting of an electrolyte (S5), the electrolyte is injected into the cap plate 141 through an electrolyte injection hole 145. The thus-injected electrolyte is transferred to the electrode assembly 120 through a second hole 134 formed in an insulation plate 130. Undefined reference numeral 190 refers to an electrolyte injection tool.

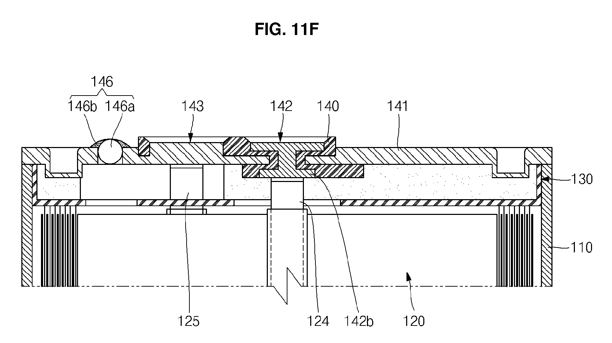

As illustrated in FIG. 11F, in the sealing of an electrolyte injection hole (S6), a metal ball 146a is engaged with the electrolyte injection hole 145 provided in the cap plate 141, and a peripheral region of the metal ball 146a is subjected to laser welding. Next, an ultraviolet (UV) hardener 146b is coated on surfaces of the metal ball 146a and the laser-welded area. When UV rays are irradiated onto the surface of the UV hardener 146b, the UV hardener 146b is hardened.

Although the present invention has been described with reference to certain exemplary embodiments thereof, it will be understood by those skilled in the art that a variety of modifications and variations may be made to the present invention without departing from the scope of the invention as defined in the appended claims.

## Claims

1. A cap assembly (140, 240, 3400, 4400) for a secondary battery, comprising:
a cap plate (141) having a hole (141c);
an electrode terminal (142) in the hole, the electrode terminal comprising an upper terminal portion (142a), a lower terminal portion (142b) and a connecting portion (142c) connecting the upper and lower terminal portions; and
an injection moulded portion (144) sealing the hole around the electrode terminal.

2. The cap assembly of claim 1, wherein the upper and lower terminal portions (142a, 142b) comprise substantially parallel plates and the connecting portion (142c) is substantially perpendicular to the parallel plates, wherein the upper terminal portion is wider than the lower terminal portion.

3. The cap assembly of claim 2, wherein a width of the lower terminal portion is equal to or greater than the diameter of the hole, and sized to permit the lower terminal portion to fit through the hole.

4. The cap assembly of any one of the preceding claims, further comprising a groove (141a) in an upper surface of the cap plate for receiving the upper terminal portion (142a), the groove being filled with the moulded portion (144).

5. The cap assembly of any one of the preceding claims, wherein the moulded portion (144) surrounds the electrode terminal (142) so that only its upper and lower surfaces are exposed.

6. The cap assembly of any one of the preceding claims, wherein the moulded portion surrounds the electrode terminal (142) and protrudes above the upper surface of the cap plate higher than the electrode terminal.

7. The cap assembly of claim 6, wherein the protruding portion of the moulded portion (144) has an inclined surface (144a) for guiding a terminal of an external device onto the electrode terminal (142).

8. The cap assembly of any one of the preceding claims, when dependent on claim 4, wherein the electrode terminal comprises a first electrode terminal, further comprising a second electrode terminal (143), wherein the groove (141a) comprises a first groove, and the cap plate (141) includes a second groove (141b, 141a) formed at a periphery of the second electrode terminal (143), and the moulded portion (144) is in the first and second grooves and surrounds both the first and the second electrode terminals.

9. The cap assembly of claim 8, wherein the second electrode terminal (143) comprises a protruding portion of the cap plate.

10. The cap assembly of claim 8, wherein the second electrode terminal (143) comprises an upper terminal portion (143a), a lower terminal portion (143b) and a connecting portion (143c) connecting the upper and lower terminal portions.

11. The cap assembly of claim 10, wherein the moulded portion (144) electrically insulates the first and second electrode terminals from the cap plate.

12. The cap assembly of any one of the preceding claims, further comprising a protective circuit module (340), the protective circuit module comprising a circuit board (341) connected to a lower surface of the electrode terminal (142, 143) by a conductive pad (343a, 343b).

13. The cap assembly of claim 12, comprising first and second auxiliary moulding portions (346, 347) between the protective circuit module and the cap plate for locating the protective circuit module relative to the cap plate.

14. A method of manufacturing a cap assembly for a secondary battery, comprising:
inserting an electrode terminal (142, 143) through a hole (141c, 141d) in a cap plate (141), the electrode terminal comprising an upper terminal portion, a lower terminal portion and a connecting portion connecting the upper and lower terminal portions; and
sealing the hole around the electrode terminal by injection moulding.

15. The method of claim 14, wherein the step of injection moulding comprises:
providing upper and lower moulds (210, 220) around the cap plate (141);
supporting a bottom surface of the electrode terminal on the lower surface of the lower mould (220); and
injecting moulding resin around the electrode terminal such that the moulding resin surrounds all of the surfaces of the electrode terminal other than the top and bottom surfaces.
